# EUROPEAN PATENT APPLICATION

(11) **EP 3 016 456 A1**
(43) Date of publication of application: **04.05.2016**
(21) Application number: 14817231.5
(22) Date of filing: 01.05.2014
(51) Int. Cl.: H04W 64/00, H04M 3/42, H04M 11/00, H04W 4/02

(54) **WIRELESS COMMUNICATION SYSTEM AND INFORMATION DETERMINATION METHOD**

(30) Priority: 26.06.2013 JP 2013133312
(71) Applicant: NTT DOCOMO, INC., Chiyoda-ku, Tokyo 100-6150 (JP)
(72) Inventor: MORIOKA, Yasufumi, Tokyo 100-6150 (JP); HAYASHI, Kouki, Tokyo 100-6150 (JP); MORIHIRO, Yoshifumi, Tokyo 100-6150 (JP)
(74) Representative: Hoffmann Eitle
(86) International application number: PCT/JP2014/062091
(87) International publication number: WO 2014/208198

(57) **Abstract**

A radio communication system has a base station that forms a cell identified by a cell identifier, a geographic information storage unit that stores a geographic information element indicating a geographic characteristic of a location at which a cell is formed, a cell visit detector that detects that a user equipment that was visiting a first cell and starts to visit a second cell differing from the first cell, a cell information obtainer that obtains a second cell identifier corresponding to the second cell when the cell visit detector detects the visit to the second cell, and a geographic information identifier that retrieves, based on the second cell identifier, a geographic information element of the second cell that corresponds to the second identifier from the geographic information storage unit.

## Description

### TECHNICAL FIELD

The present invention relates to a radio communication system and to an information identification method.

### BACKGROUND ART

In recent years, a technique to identify geographic locations of user equipments in a radio communication system has been proposed. The geographic locations of user equipments can be identified based on, for example, information measured by a GPS (Global Positioning System).

### Related Art Document

### Patent Document

Patent Document 1 Japanese Translation of PCT International Application Publication No. JP-T-2007-537622

### SUMMARY OF THE INVENTION

### Problem to be Solved by the Invention

Measuring a geographic location based on information measured using GPS increases power consumed by user equipment due to heavy processing load. Therefore, in a case in which either the use or non-use of the GPS can be selected at user equipments, users sometimes select not to use the GPS. In such user equipments, the geographic location can be or cannot be obtained, depending on preferences of the users. Moreover, only coordinate information such as latitude, longitude, and elevation can be obtained using the measurements results by the GPS, and no information indicating characteristics of a measured geographic location (for example, information on a facility located at the geographic location) can be obtained.

In consideration of the abovementioned situations, the present invention has as an object to identify geographic characteristics of places (cells) visited by user equipments.

### Means of Solving the Problems

A radio communication system of the present invention has plural base stations each forming a cell identified by a cell identifier; a geographic information storage unit configured to store plural geographic information elements each indicating a geographic characteristic of a location at which the cell is formed; a cell visit detector configured to detect that the user equipment that was visiting a first cell starts to visit a second cell differing from the first cell; a cell information obtainer configured to obtain a second cell identifier corresponding to the second cell when the cell visit detector detects the start of the visit to the second cell; and a geographic information identifier configured to retrieve, based on the second cell identifier, a geographic information element of the second cell that corresponds to the second identifier from the geographic information storage unit.

In a preferred embodiment of the present invention, the radio communication system may additionally have a logic identifier obtainer configured to obtain plural logic identifiers that correspond to the second cell identifier based on the second cell identifier obtained by the cell information obtainer, and the geographic information identifier may retrieve, from the geographic information storage unit, a geographic information element of the second cell that corresponds to one or more of the plural logic identifiers obtained by the logic identifier obtainer.

In a preferred embodiment of the present invention, the logic identifier obtainer may separate the second cell identifier obtained by the cell information obtainer based on a predefined bit string logic configuration, to obtain the plural logic identifiers.

In a preferred embodiment of the present invention, the radio communication system may additionally have a ping-ponging state determiner configured to determine whether a state has occurred in which bouncing of the link has occurred, in which state the start and end of the visit to the second cell is repeated; and a geographic information updater configured to, when the ping-ponging state determiner determines that a ping-ponging state has occurred between the second cell and another cell and a geographic information element corresponding to the other cell is not stored in the geographic information storage unit, store a geographic information element including a geographic characteristic indicated by the geographic information element of the second cell as a geographic information element of the other cell in the geographic information storage unit.

An information identification method of the present invention is an information identification method for use in a radio communication system including plural base stations each forming a cell identified by a cell identifier; and a geographic information storage unit that stores plural geographic information elements each indicating a geographic characteristic of a location where the cell is formed, the method including: detecting that the user equipment that was visiting a first cell starts to visit a second cell differing from the first cell; obtaining a second cell identifier corresponding to the second cell when the start of the visit to the second cell is detected; and retrieving, based on the second cell identifier, geographic information of the second cell that corresponds to the second cell identifier from the geographic information storage unit.

### Effect of the Invention

According to the present invention, geographic characteristics of places (cells) that user equipments visit can be appropriately identified.

### BRIEF DESCRIPTION OF THE DRAWINGS

FIG. 1 is a block diagram illustrating a radio communication system according to a first embodiment.
FIG. 2 is a diagram illustrating cells formed by base stations according to the first embodiment.
FIG. 3 is a block diagram illustrating a configuration of a user equipment according to the first embodiment.
FIG. 4 is a block diagram illustrating a configuration of a base station according to the first embodiment.
FIG. 5 is a flowchart of an identification operation of geographic information according to the first embodiment.
FIG. 6 is a configuration example of geographic information stored in a storage unit.
FIG. 7 illustrates relationships between a cell identifier and logic identifiers.
FIG. 8 is a block diagram illustrating a configuration of a user equipment according to a second embodiment.
FIG. 9 is a flowchart of an update operation of geographic information according to the second embodiment.
FIG. 10 illustrates an example of a newly generated geographic information element of a new cell.
FIG. 11 illustrates configuration examples of geographic information stored in a storage unit.

### MODES FOR CARRYING OUT THE INVENTION

### 1. First Embodiment

### 1 (1). Overview of radio communication system

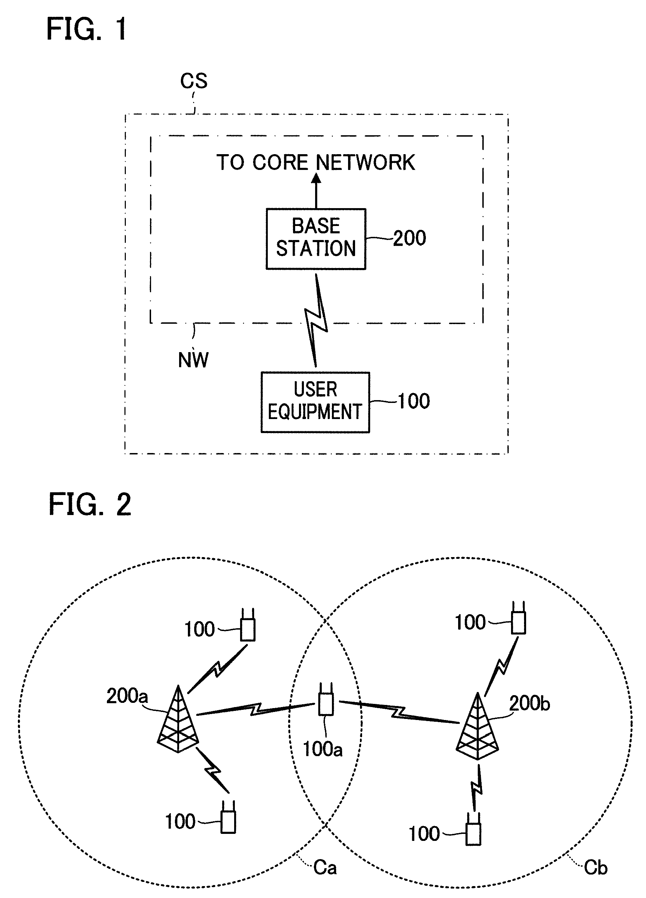

FIG. 1 is a block diagram illustrating a radio communication system CS according to a first embodiment of the present invention. The radio communication system CS has, as its elements, a user equipment 100 and a base station 200. The base station 200 is connected to a core network provided with a switching center and a gateway, which are elements other than those shown in the figure. A network NW has the elements except for the user equipment 100 from among the above elements provided in the radio communication system CS.

Each element of the radio communication system CS executes communication in accordance with a freely selected access technology. One such example that can be employed as an access technology is an LTE/SAE (Long Term Evolution/System Architecture Evolution) standard contained in the 3GPP (Third Generation Partnership Project) standard. Multiple radio access systems that are usable include a frequency division multiple access and a time division multiple access. In the radio communication system CS, plural radio access technologies (for example, 3G and LTE) may be employed.

As shown in FIG. 2, the base stations 200 (200a and 200b) have cells C (Ca and Cb) formed therearound. Each cell C is identified by a unique cell identifier or by plural logic identifiers LI that are derived from the unique cell identifier. User equipments 100 each are able to communicate by radio with a base station 200 that corresponds to a cell C that each user equipment 100 visits (is currently located at). One base station 200 may form plural cells C. A radio access technology used in each cell C may be freely selected. For example, the same radio access technology may be used across plural cells C formed by one base station 200, or different radio access technologies may be used.

In FIG. 2, a user equipment 100a is located in both the cell Ca and the cell Cb (i.e., is located at the cell edges). Since the radio communication environment changes in each moment, a cell C (for example, a cell C for which the user equipment 100a has the highest reception power) that the user equipment 100a is visiting changes in each moment. Such frequent changes in the visited cells, without the user equipment 100a moving significantly, is generally called "ping-ponging" or "fluttering".

### 1 (2). Configuration of each element

### 1 (2) -1. Configuration of user equipment

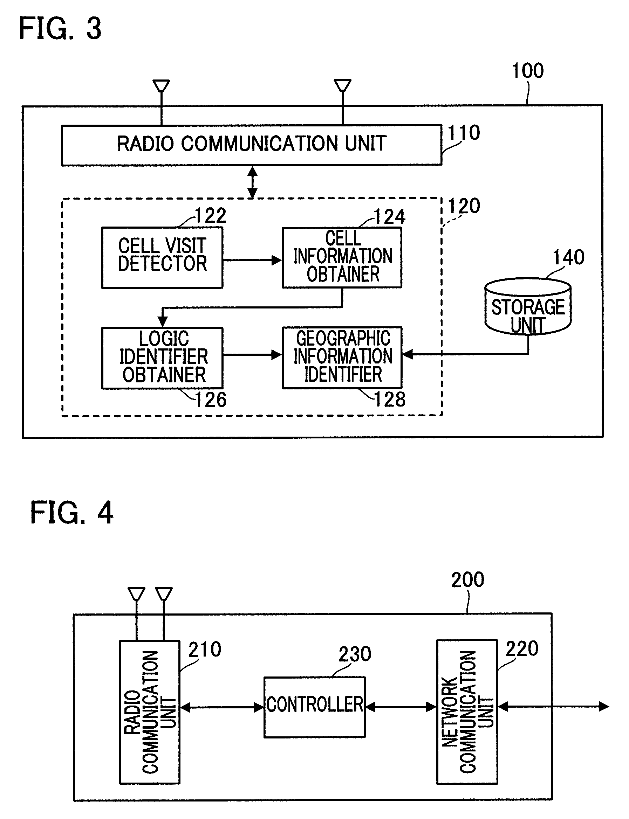

FIG. 3 is a block diagram illustrating a configuration of the user equipment 100 according to the first embodiment. The user equipment 100 has a radio communication unit 110, a controller 120, and a storage unit 140. An output device for outputting speech, video, etc. and an input device for receiving instructions from a user are not shown for the sake of convenience. The radio communication unit 110 is an element for executing radio communication with the base stations 200, and includes a transmitter-receiver antenna, a reception circuit for receiving downlink radio signals from the base stations 200 for conversion into electric signals, and a transmission circuit for converting electric signals such as control signals and user signals into uplink radio signals. The storage unit 140 stores information on communication control and information (geographic information GI) indicating geographic characteristics of locations at which the cells C are formed. The storage unit 140 thus can serve as a geographic information storage unit. The geographic information GI includes plural geographic information elements GE, which will be described later in detail.

The controller 120 has a cell visit detector 122, a cell information obtainer 124, a logic identifier obtainer 126, and a geographic information identifier 128. The cell visit detector 122 detects that the user equipment 100 departs from a currently visited cell C (original cell) and starts to visit a cell C (new cell). The cell information obtainer 124 obtains a cell identifier that corresponds to a cell C. The logic identifier obtainer 126 obtains multiple logic identifiers LI that correspond to a cell identifier. The logic identifier LI will be described later in detail. The geographic information identifier 128 retrieves geographic information elements GE from the storage unit 140. Operations of each element in the controller 120 will be described later in more detail. The controller 120 and each element in the controller 120 are functional blocks implemented by a CPU (not shown) of the user equipment 100 executing a computer program stored in the storage unit 140 and functioning in accordance with the computer program.

### 1 (2) -2. Configuration of base station

FIG. 4 is a block diagram illustrating a configuration of the base station 200 according to the first embodiment. The base station 200 has a radio communication unit 210, a network communication unit 220, and a controller 230. The radio communication unit 210 is an element for executing radio communication with the user equipments 100, and is configured in substantially the same manner as the radio communication unit 110 of the user equipment 100. The network communication unit 220 is an element that executes wired communication with other nodes (other base stations 200, switching centers, gateways, etc.) in the network NW. The controller 230 transmits or receives, via the radio communication unit 210 and the network communication unit 220, signals (control signals, data signal, etc.) to and from the user equipments 100 and other nodes in the network NW. The controller 230 is a functional block implemented by a CPU (not shown) of the base station 200 executing a computer program stored in a storage unit (not shown) and functioning in accordance with the computer program.

### 1 (3). Identification operation of geographic information

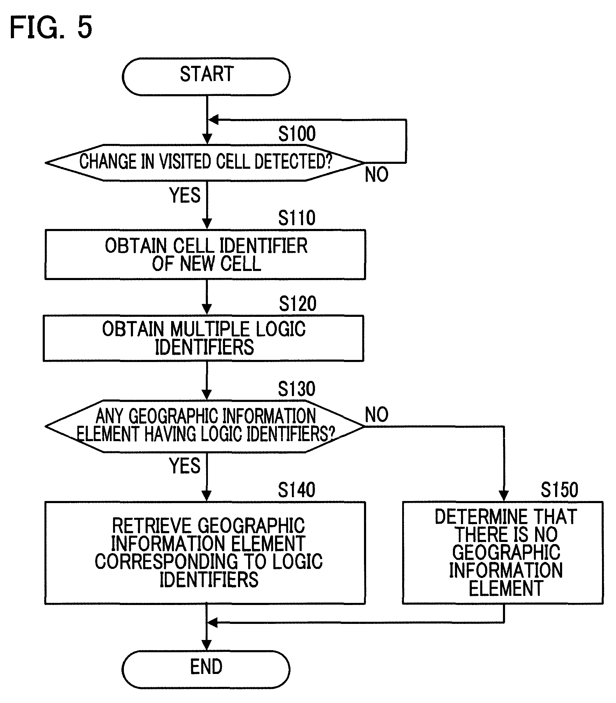

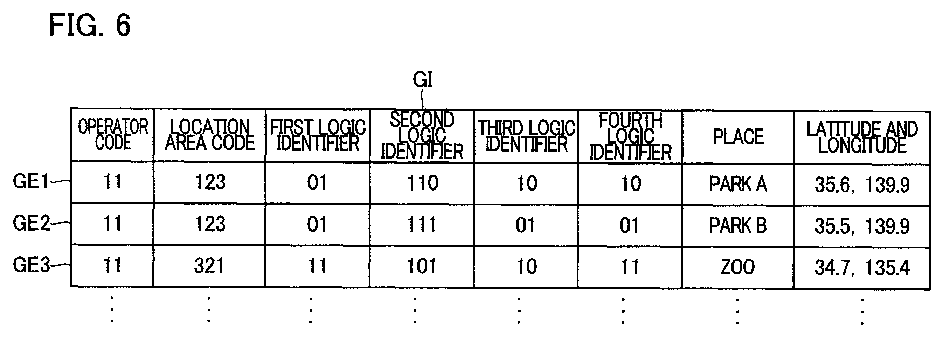

In the following, an identification operation of geographic information according to the present embodiment will be described. FIG. 5 is a flowchart of the identification operation of geographic information. FIG. 6 illustrates a configuration of geographic information GI stored in the storage unit 140. The geographic information GI includes plural geographic information elements GE (GE1, GE2, GE3, ...). Each geographic information element GE contains multiple logic identifiers LI obtained from a cell identifier corresponding to a cell C, an operator code of an operator that operates the cell C, a code of a location area (a unit area of location registration) to which the cell C belongs, and information indicating geographic characteristics of a location at which the cell C is formed (for example, information on a facility that is located at the location at which cell C is formed, latitude and longitude information of the location at which the cell C is formed, etc.).

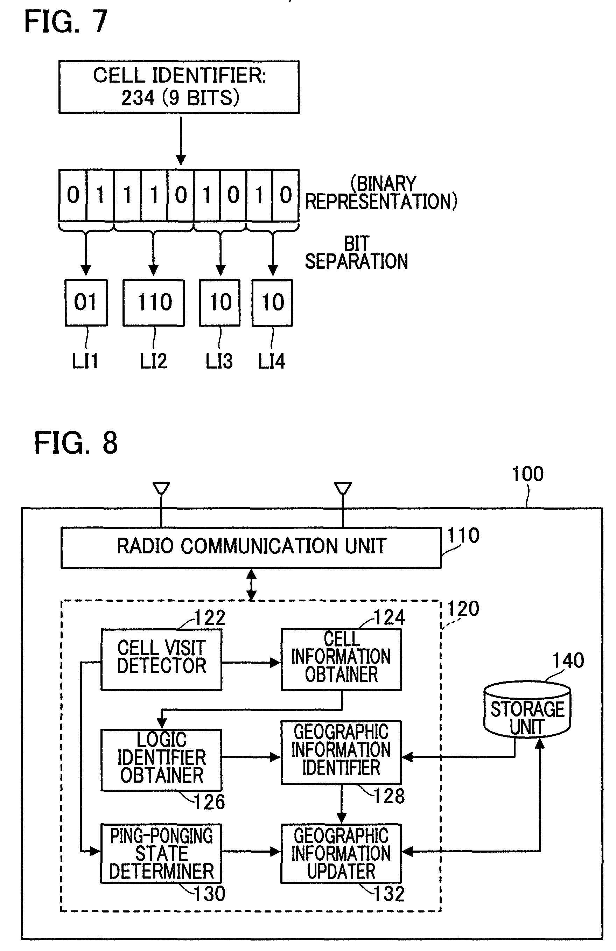

FIG. 7 illustrates relationships between a cell identifier and multiple logic identifiers LI obtained from the cell identifier. In the example shown in FIG. 7, a first logic identifier LI1, a second logic identifier LI2, a third logic identifier LI3, and a fourth logic identifier LI4 are shown as the multiple logic identifiers LI. Each logic identifier LI is obtained by logically separating the cell identifier in a unit of a bit. For example, a bit string "011101010" representing in a binary number the cell identifier ("234") of the geographic information element GE1 is separated, such that a 2-bit first logic identifier LI1 ("01"), a 3-bit second logic identifier LI2 ("110"), a 2-bit third logic identifier LI3 ("10"), and a 2-bit fourth logic identifier LI4 ("10") are obtained from higher to lower bits. Each logic identifier LI may indicate freely selected information. For example, the logic identifier LI indicates any one of a region at which the cell C is formed (Hokkaido, Tohoku, Kanto, etc.), the base station 200 which forms the cell C, the direction of an antenna that corresponds to the cell C, or a frequency band that corresponds to the cell C. The number of the logic identifiers LI included in one cell is not limited to four.

In FIG. 5, the cell visit detector 122 detects whether the user equipment 100 has ended visiting the cell Cb (original cell) and has started visiting the cell Ca (new cell) (whether the visited cell has been changed) (S100). In a case in which no change in the cell that is visited by the user equipment 100 is detected, a detection loop is repeated by the cell visit detector 122 (S100; NO). In a case in which it is detected that the user equipment 100 starts a visit to the cell Ca, departing from the cell Cb (S100; YES), the cell information obtainer 124 obtains a cell identifier that corresponds to the cell Ca (new cell) (S110).

Subsequently, the logic identifier obtainer 126, based on the cell identifier of the cell Ca obtained by the cell information obtainer 124, obtains multiple logic identifiers LI that correspond to the cell identifier (S120). More specifically, the logic identifier obtainer 126, as shown in FIG. 7, separates the cell identifier of the cell Ca in accordance with a predefined bit string logic configuration (2 bits - 3 bits - 2 bits - 2 bits), to obtain the multiple logic identifiers LI (LI1, LI2, LI3, and LI4).

The geographic information identifier 128 determines whether a geographic information element GE that includes the logic identifiers LI obtained by the logic identifier obtainer 126 is contained in the geographic information GI (in the storage unit 140) (S130). In a case in which the logic identifiers LI are contained in the geographic information GI (S130; YES), the geographic information identifier 128 retrieves a geographic information element GE1 of the cell Ca that corresponds to the logic identifiers LI from the storage unit 140 (S140). Consequently, in this example, information indicating that "park A" is located at a location at which the cell Ca is formed, and the latitude and longitude information (35 degrees, 6 minutes, north latitude, and 139 degrees, 9 minutes, east longitude) of the location at which the cell Ca is formed, are obtained. The obtained information may be freely used. For example, the obtained information is displayed on the user equipment 100.

On the other hand, when the logic identifiers LI are not contained in the geographic information GI (S130; NO), the geographic information identifier 128 determines that there is no geographic information element GE that includes the logic identifiers LI obtained by the logic identifier obtainer 126 (S150).

### 1 (4). Effects of the present embodiment

The above configuration enables, based on the multiple logic identifiers LI obtained from a cell identifier of a new cell, retrieval of geographic information (geographic information element GE) on the new cell that corresponds to the multiple logic identifiers LI. Therefore, the geographic characteristics of a place (cell C) that the user equipment 100 visits can be appropriately identified.

### 2. Second Embodiment

In the following, description will be given of a second embodiment according to the present invention. In each embodiment illustrated below, the same reference numerals and signs will be used for those elements for which actions and elements are the same as those of the first embodiment, and description thereof will be omitted where appropriate.

### 2(1). Configuration of base station

FIG. 8 is a block diagram illustrating a configuration of a user equipment 100 according to the second embodiment. The controller 120 of the second embodiment additionally includes a ping-ponging state determiner 130 and a geographic information updater 132. The ping-ponging state determiner 130 determines whether a ping-ponging state in which starts and ends of a visit to a cell C are repeated has occurred. The geographic information updater 132 updates the geographic information GI.

### 2 (2). Updating operation of geographic information

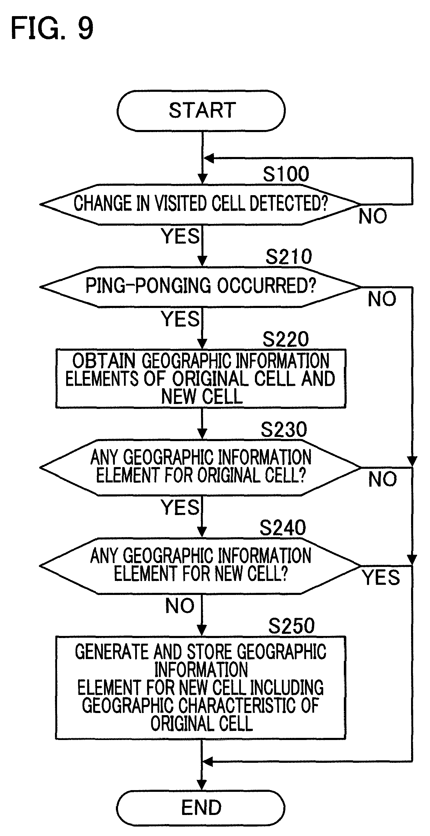

FIG. 9 is a flowchart of an updating operation of geographic information according to the second embodiment. To give an overview, in a case in which a ping-ponging has occurred, plural cells C in the ping-ponging relationship are made to share information indicating geographic characteristics.

The cell visit detector 122, in substantially the same way as in the first embodiment, detects whether the cell C at which the user equipment 100 remains has changed (S100). In a case in which the visited cell has changed (S100 YES), the ping-ponging state determiner 130 determines whether a ping-ponging state has occurred (S210). Conditions for the determination in Step S210 may be freely determined. For example, the ping-ponging state determiner 130 may determine that a ping-ponging state with regard to a cell C has occurred in a case in which the difference between a time when the most recent visit to the cell C ended and a time when the current visit to the same cell C started is equal to or shorter than a threshold (S210 YES).

In a case in which Step S210 determines that a ping-ponging state has occurred, the geographic information updater 132 obtains geographic information elements GE of the original cell and the new cell from the storage unit 140 (S220). When the geographic information element GE of the original cell is contained in the geographic information GI but no geographic information elements GE of the new cell is contained in the geographic information GI (S230 YES, and S240 NO), the geographic information updater 132 generates a geographic information element GE including geographic characteristics indicated by the geographic information element GE of the original cell, for storage into the geographic information GI (storage unit 140) as a geographic information element GE of the new cell (S250).

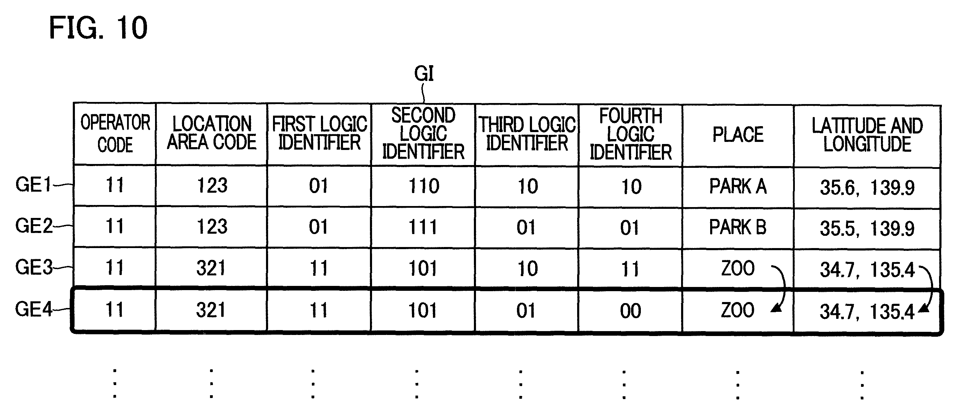

FIG. 10 illustrates an example of the newly generated geographic information element GE of the new cell. In FIG. 10, a cell C that corresponds to the geographic information element GE3 is the original cell and a cell C that corresponds to the geographic information element GE4 is the new cell. In Step S250, the geographic information updater 132 generates a geographic information element GE4 including the geographic characteristics (place information and latitude and longitude information) indicated by the geographic information element GE3 of the original cell and multiple logic identifiers LI corresponding to the new cell, for storage in the geographic information GI (storage unit 140).

### 2 (3). Effects of the present embodiment

With the above configuration, when a ping-ponging state has occurred, geographic characteristics already obtained with regard to one of the cells between which the ping-ponging has occurred are stored as geographic characteristics of the other cell. Therefore, geographic characteristics of a place (the cell C) that the user equipment 100 visits can be identified more appropriately.

### 3. Modifications

The above embodiments can be modified in various ways. In the following, specific modifications will be given as examples. Two or more modes selected from the above embodiments and the following examples may be combined as long as they do not conflict.

### 3(1). Modification 1

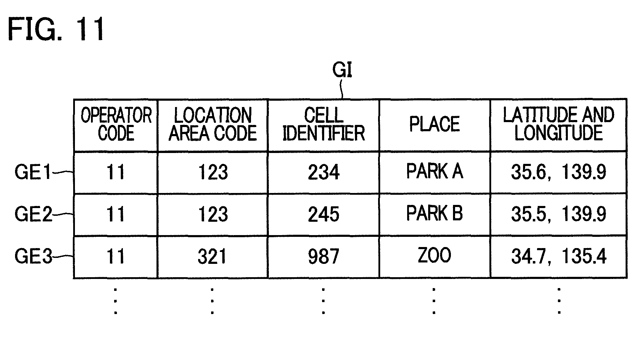

In the above embodiments, the multiple logic identifiers LI are stored in the geographic information GI (storage unit 140) and are used for identification of a cell C. However, as the geographic information GI illustrated in FIG. 11, cell identifiers themselves may be stored in the geographic information GI (storage unit 140) and be used for the identification of a cell C. When the configuration of this modification is employed, the identification operation of geographic information (first embodiment) and the updating operation of geographic information (second embodiment) use cell identifiers in place of the multiple logic identifiers LI. Both the cell identifiers and the multiple logic identifiers LI may be used.

### 3 (2). Modification 2

In the above embodiments, the user equipment 100 has the cell visit detector 122, the cell information obtainer 124, the logic identifier obtainer 126, the geographic information identifier 128, the ping-ponging state determiner 130, the geographic information updater 132, and the storage unit 140 (geographic information GI). However, at least one of the above elements may be provided at an apparatus (for example, the base station 200 or an exclusive server apparatus) provided in the network NW.

For example, the storage unit 140 may be provided at an apparatus in the network NW. The cell information obtainer 124, the logic identifier obtainer 126, the geographic information identifier 128, and the storage unit 140 may be provided at an apparatus in the network NW. In other words, each of the elements for implementing the present invention may be provided at a freely selected place in the radio communication system CS.

### 3 (3). Modification 3

In Step S110, information other than the logic identifiers LI of the new cell may be additionally obtained. For example, the operator code and the location area code may be additionally obtained. In that case, the determination in Step S130 may determine whether there is any geographic information element GE that includes the obtained logic identifiers LI, the operator code, and the location area code.

### 3 (4). Modification 4

In Step S130, the geographic information identifier 128 may determine whether the geographic information GI (storage unit 140) contains any geographic information element GE that includes a part of the multiple logic identifiers LI the logic identifier obtainer 126 obtained in Step S120. For example, the geographic information identifier 128 may determine whether the geographic information GI contains a geographic information element GE that includes the third logic identifier LI3 from among the first logic identifier LI1 to the fourth logic identifier LI4, which are obtained.

With the above configuration, geographic characteristics of a place (cell C) that the user equipment 100 visits can be appropriately determined even in a case in which information on only a part of the multiple logic identifiers LI defined in the radio communication system CS is stored in the geographic information GI (storage unit 140).

### 3 (5). Modification 5

When the user equipment 100 has the storage unit 140, the geographic information GI (geographic information element GE) in the storage unit 140 may be updated from an apparatus in the network NW. Alternatively or additionally, the geographic information GI (geographic information element GE) may be updated based on inputs from a user.

### 3 (6). Modification 6

The user equipment 100 is a freely selected apparatus capable of performing radio communication with the base station 200. The user equipment 100 may be a portable telephone terminal such as a feature phone or a smart phone, may be a desktop personal computer, a notebook personal computer, a UMPC (Ultra-Mobile Personal Computer), a portable game device, or any other radio terminal.

### 3 (7). Modification 7

The functions executed by respective CPUs in each of the elements (the user equipment 100 and the base station 200) of the radio communication system CS may be executed by hardware instead of by the CPUs, or may be executed by programmable logic devices such as an FPGA (Field Programmable Gate Array) and a DSP (Digital Signal Processor).

### Description of Reference Signs

100...user equipment, 110...radio communication unit, 120...controller, 122...cell visit detector, 124...cell information obtainer, 126...logic identifier obtainer, 128...geographic information identifier, 130...ping-ponging state determiner, 132...geographic information updater, 140...storage unit, 200...base station, 210...radio communication unit, 220...network communication unit, 230...controller, C (Ca, Cb)...cell , CS...radio communication system, GE...geographic information element, GI...geographic information, LI...logic identifier, NW...network, SI...visit information.

## Claims

1. A radio communication system comprising:
plural base stations each forming a cell identified by a cell identifier;
a geographic information storage unit configured to store plural geographic information elements each indicating a geographic characteristic of a location at which the cell is formed;
a cell visit detector configured to detect that a user equipment that was visiting a first cell starts to visit a second cell differing from the first cell;
a cell information obtainer configured to obtain a second cell identifier corresponding to the second cell when the cell visit detector detects the start of the visit to the second cell; and
a geographic information identifier configured to retrieve, based on the second cell identifier, a geographic information element of the second cell that corresponds to the second identifier from the geographic information storage unit.

2. The radio communication system according to Claim 1, further comprising a logic identifier obtainer configured to obtain plural logic identifiers that correspond to the second cell identifier based on the second cell identifier obtained by the cell information obtainer,
wherein the geographic information identifier retrieves, from the geographic information storage unit, a geographic information element of the second cell that corresponds to one or more of the plural logic identifiers obtained by the logic identifier obtainer.

3. The radio communication system according to Claim 2,
wherein the logic identifier obtainer separates the second cell identifier obtained by the cell information obtainer based on a predefined bit string logic configuration, to obtain the plural logic identifiers.

4. The radio communication system according to any one of Claims 1 to 3, further comprising:
a ping-ponging state determiner configured to determine whether a ping-ponging state has occurred, in which state start and ending of a visit to the second cell is repeated; and
a geographic information updater configured to, when the ping-ponging state determiner determines that the ping-ponging state has occurred between the second cell and another cell and a geographic information element corresponding to the other cell is not stored in the geographic information storage unit, store a geographic information element including a geographic characteristic indicated by the geographic information element of the second cell as a geographic information element of the other cell in the geographic information storage unit.

5. An information identification method for use in a radio communication system including plural base stations each forming a cell identified by a cell identifier; and a geographic information storage unit that stores plural geographic information elements each indicating a geographic characteristic of a location at which the cell is formed, the method comprising:
detecting that the user equipment that was visiting a first cell starts to visit a second cell differing from the first cell;
obtaining a second cell identifier corresponding to the second cell when the start of the visit to the second cell is detected; and
retrieving, based on the second cell identifier, geographic information of the second cell that corresponds to the second cell identifier from the geographic information storage unit.
